# EUROPEAN PATENT APPLICATION

(11) **EP 4 844 089 A1**
(43) Date of publication of application: **25.11.2026**
(21) Application number: 24923680.3
(22) Date of filing: 28.10.2024
(51) Int. Cl.: C22C 38/00, C21D 8/12, C21D 9/46, C22C 38/60

(54) **HOT-ROLLED ANNEALED SHEET, METHOD FOR PRODUCING SAME, AND METHOD FOR PRODUCING NON-ORIENTED ELECTROMAGNETIC STEEL SHEET**

(30) Priority: 05.02.2024 JP 2024015546
(71) Applicant: JFE Steel Corporation, Tokyo 100-0011 (JP)
(72) Inventor: MARUYAMA, Shigehiro, Tokyo 100-0011 (JP); TANAKA, Takaaki, Tokyo 100-0011 (JP); SAITO, Hayato, Tokyo 100-0011 (JP); OKUBO, Tomoyuki, Tokyo 100-0011 (JP)
(74) Representative: Hoffmann Eitle
(86) International application number: PCT/JP2024/038281
(87) International publication number: WO 2025/169547

(57) **Abstract**

Provided is a hot rolling and annealing technology for an electrical steel sheet having excellent cold rollability. Specifically, provided is a hot-rolled annealed steel sheet having a chemical composition including, in mass%, C: 0.010% or less, Si: 1.0% or more and 5.0% or less, Mn: 0.05% or more and 5.0% or less, P: 0.10% or less, S: 0.010% or less, Al: 3.0% or less, N: 0.0080% or less, and O: 0.0050% or less, with the balance being Fe and unavoidable impurities, in which the ratio Re/Rc of the proportions of recrystallized structure between the edge portion and the central portion in the width direction of the sheet is 0.95 or less. Also provided is a method for producing a hot-rolled annealed steel sheet, including hot-rolling a steel material having the foregoing chemical composition to obtain a hot-rolled steel sheet, and performing hot-rolled sheet annealing on the hot-rolled steel sheet, in which during the hot-rolled sheet annealing, when the central portion in the width direction of the hot-rolled steel sheet is heated from room temperature to a holding temperature and held at the temperature, the edge portion of the hot-rolled steel sheet reaches the maximum temperature lower than the holding temperature from room temperature, and the heating rate Vc of the central portion in the width direction of the sheet is set higher than the heating rate Ve of the edge portion by 1.0°C/s or more.

## Description

### Technical Field

The present invention relates to a hot-rolled annealed steel sheet and a method for producing the same, and a method for producing a non-oriented electrical steel sheet.

### Background Art

In recent years, due to environmental concerns such as global warming, there has been a growing demand for reducing CO₂ emissions and conserving energy. In particular, in the automotive field, development is underway for hybrid electric vehicles (HEVs) that combine engines and motors, electric vehicles (EVs) driven solely by electric motors, and fuel cell vehicles (FCEVs). Motors used in HEVs, EVs, and FCEVs are typically driven in a high-frequency range, which is advantageous for high-speed rotation, to achieve high motor efficiency. Non-oriented electrical steel sheets are frequently used as the core materials of such motors. To achieve high motor efficiency, there is a strong demand for reducing iron losses of the steel sheets in the high-frequency range.

Conventionally, iron losses in non-oriented electrical steel sheets have been reduced primarily by increasing specific resistance through the addition of alloying elements such as Si and Al, or by reducing eddy current losses by reducing the sheet thickness. However, adding a large number of alloying elements reduces the ductility and toughness of the steel sheets, leading to frequent fractures during a cold rolling step, which is problematic.

As a technology for suppressing fractures in high-alloy steel, Patent Literature 1, for example, discloses a method for producing a non-oriented electrical steel sheet with high magnetic flux density by cold rolling a rapidly solidified cast slab at 180°C to 350°C to suppress cracking during cold rolling.

### Citation List

### Patent Literature

Patent Literature 1: Japanese Patent Laid-Open No. 2004-110985

### Summary of Invention

### Technical Problem

However, although the technique described in Patent Literature 1 can suppress cracking by performing cold rolling in the temperature range of 180 to 350°C, it presents issues such as the difficulty in maintaining the steel sheet at a high temperature during rolling and an increased risk of equipment wear, including the burning of lubricating oil on the rolls.

In order to solve the above problems of the prior art, an object of the present invention is to provide a hot-rolled annealed steel sheet that exhibits excellent cold rollability in the subsequent process without deteriorating the magnetic properties of a non-oriented electrical steel sheet as a final product, and to propose an advantageous method for producing the same. Another object of the present invention is to propose a method for producing a non-oriented electrical steel sheet using the hot-rolled annealed steel sheet. Herein, the term "cold rollability" includes properties such as fracture resistance and edge crack resistance.

### Solution to Problem

As a result of extensive studies, the inventors have found that, in most cases, the initiation sites of fractures caused by cold rolling are located at the edge portions of a steel strip. Accordingly, the inventors have discovered that fractures and cracks caused by cold rolling can be significantly suppressed by increasing the fracture resistance of the edge portions of the steel strip, even without increasing the fracture resistance of the entire steel strip. Furthermore, as a method for increasing the fracture resistance of the edge portions of the steel strip, the inventors have found that it is effective to retain unrecrystallized structure at the edge portions of the steel strip, thereby creating a difference in the proportions of recrystallized structure between the edge portions and the central portion of the steel strip. With this method, it is possible to improve the fracture resistance more effectively than by reducing the proportion of recrystallized structure in the entire steel strip and also prevent a degradation in magnetic properties.

That is, a hot-rolled annealed steel sheet according to the present invention that advantageously solves the above problems has a chemical composition including, in mass%, C: 0.010% or less, Si: 1.0% or more and 5.0% or less, Mn: 0.05% or more and 5.0% or less, P: 0.10% or less, S: 0.010% or less, Al: 3.0% or less, N: 0.0080% or less, and O: 0.0050% or less, and further optionally including at least one group selected from: Group A: one or two elements selected from the group consisting of Sn: 0.001% or more and 0.20% or less and Sb: 0.001% or more and 0.20% or less, Group B: at least one element selected from the group consisting of Ca: 0.0001% or more and 0.10% or less, Mg: 0.0001% or more and 0.10% or less, and REM: 0.0001% or more and 0.10% or less, Group C: one or two elements selected from the group consisting of B: 0.002% or more and 0.20% or less and Mo: 0.002% or more and 0.20% or less, Group D: Zn: 0.0005% or more and 0.0050% or less, Group E: Ni: 0.01% or more and 1.0% or less, Group F: Cr: 0.1% or more and 5.0% or less, Group G: Cu: 0.005% or more and 1.0% or less, Group H: at least one element selected from the group consisting of Ti: 0.001% or more and 0.010% or less, V: 0.001% or more and 0.050% or less, Nb: 0.001% or more and 0.005% or less, Ta: 0.0001% or more and 0.0020% or less, W: 0.001% or more and 0.050% or less, and Pb: 0.0001% or more and 0.0020% or less, Group I: Co: 0.001% or more and 0.100% or less, Group J: one or two elements selected from the group consisting of Ga: 0.0005% or more and 0.0300% or less and Ge: 0.0005% or more and 0.0300% or less, and Group K: As: 0.001% or more and 0.020% or less, with the balance being Fe and unavoidable impurities, characterized in that a ratio Re/Rc is 0.95 or less, the ratio Re/Rc being a ratio of a proportion Re of recrystallized structure at a steel sheet position Xe located 10 mm from an outermost edge of the steel sheet in a width direction to a proportion Rc of recrystallized structure at a central portion Xc in the width direction of the sheet.

Preferably, the hot-rolled annealed steel sheet according to the present invention further satisfies one or both of the following features: the proportion Rc of recrystallized structure at the central portion Xc in the width direction of the sheet is 80% or more, and the proportion Re of recrystallized structure at the steel sheet position Xe is in a range of 5% to 95%.

A method for producing a hot-rolled annealed steel sheet according to the present invention that advantageously addresses the above problems is a method for producing the hot-rolled annealed steel sheet according to any of the above, including
a hot rolling step in which a steel material having the chemical composition described above is hot rolled to obtain a hot-rolled steel sheet, and
a hot-rolled sheet annealing step in which the hot-rolled steel sheet is subjected to hot-rolled sheet annealing,
characterized in that, in the hot-rolled sheet annealing step, when the central portion Xc in the width direction of the hot-rolled steel sheet is heated from room temperature to a holding temperature T₁ and held at the temperature, the temperature of the steel sheet position Xe located 10 mm from the outermost edge portion in the width direction of the hot-rolled steel sheet increases from room temperature to a maximum temperature T₂ lower than the holding temperature T₁, and a heating rate Vc of the central portion Xc in the width direction of the sheet is set higher than a heating rate Ve of the steel sheet position Xe by 1.0°C/s or more.

Preferably, the method for producing the hot-rolled annealed steel sheet according to the present invention further satisfies the conditions as follows:
(a) in the hot-rolled sheet annealing step, at least one of conditions (1) to (4) below is satisfied; or
(b) when a hot-rolled steel sheet having a width W of 900 mm to 1100 mm is subjected to the hot-rolled sheet annealing step, a heating-suppressed region is provided over a range extending from the outermost edge portion to a position located 20 mm or more and 0.250 × W or less inward from the outermost edge portion in the width direction of the sheet.

(1) the holding temperature T₁ for the central portion Xc in the width direction of the hot-rolled steel sheet is 900°C or higher.
(2) a holding time t₁ for the central portion Xc in the width direction of the hot-rolled steel sheet at the holding temperature T₁ is set in a range of 2 seconds or longer and 120 seconds or shorter.
(3) the maximum temperature T₂ of the steel sheet position Xe is in a range of 750°C or higher and 1000°C or lower.
(4) a time t₂ during which the steel sheet position Xe is at the maximum temperature T₂-50°C or higher is in a range of 5 seconds or longer and 20 seconds or shorter.

A method for producing a non-oriented electrical steel sheet according to the present invention that advantageously solves the above problems is characterized in that the method includes cold-rolling the hot-rolled annealed steel sheet according to any of the above to obtain a cold-rolled steel sheet and subjecting the cold-rolled sheet to finishing annealing to obtain a cold-rolled annealed steel sheet.

In the present invention, the term "edge portion" refers to both edges in the width direction. However, the present invention need not necessarily be applied to both edges and application to only one edge is also effective in reducing fractures. For example, when edge cracks or fractures tend to occur predominantly on one edge due to the properties of a rolling mill, applying the present invention to only one edge can achieve the fracture-reducing effect.

### Advantageous Effects of Invention

According to the present invention, a hot-rolled annealed steel sheet with excellent cold rollability can be provided. Furthermore, using the hot-rolled annealed steel sheet, it is possible to produce a non-oriented electrical steel sheet with high magnetic flux density and low iron losses at high frequencies.

### Description of Embodiments

Hereinafter, an embodiment of the present invention will be described, along with the reasons for the limitations.

### [Hot-rolled annealed steel sheet]

### <Chemical composition of steel sheet>

A preferred chemical composition of a hot-rolled annealed steel sheet according to one embodiment of the present invention will be described. The unit of the content of each element in the chemical composition is "mass%," and is hereinafter expressed simply in "%" unless otherwise specified.

### <Basic chemical composition>

### C: 0.010% or less

C is a detrimental element that causes magnetic aging in a non-oriented electrical steel sheet as a product sheet, forming carbides and thus increasing iron loss. In particular, if the C content exceeds 0.010%, such an adverse effect becomes significant. Therefore, the C content in the steel sheet is set to 0.010% or less. Preferably, it is 0.004% or less. Although no particular lower limit is imposed, since a steel sheet with an excessively low C content is very expensive, the C content is preferably set to about 0.0001%.

### Si: 1.0% or more and 5.0% or less

Si has the effect of increasing the specific resistance of steel and thereby reducing iron loss and strengthens steel by solid-solution strengthening. To obtain such effects, the Si content may be set to 1.0% or more. On the other hand, if the Si content exceeds 5.0%, magnetic flux density decreases significantly due to a decrease in saturation magnetic flux density. Therefore, the upper limit of the Si content is set to 5.0% or less. Thus, the Si content is set in the range of 1.0% or more and 5.0% or less. Preferably, it is set to 1.5% or more and less than 4.5%. More preferably, it is set to 2.0% or more and less than 4.0%.

### Mn: 0.05% or more and 5.0% or less

Mn, like Si, is an element useful for increasing the specific resistance and strength of steel. To achieve such effects, Mn is preferably contained in an amount of 0.05% or more. On the other hand, if the Mn content exceeds 5.0%, it may promote the precipitation of MnC, thereby degrading magnetic properties. Therefore, the upper limit of the Mn content is set to 5.0%. Thus, the Mn content is set in the range of 0.05% or more and 5.0% or less. Preferably, it is 0.1% or more and 3.0% or less.

### P: 0.10% or less

P is a useful element used to adjust the strength (i.e., hardness) of steel. However, if the P content exceeds 0.10%, toughness decreases, making cracking more likely during processing. Therefore, the upper limit of the P content is set to 0.10%. Although no particular lower limit is imposed, since a steel sheet with an excessively low P content is very expensive, the P content is preferably set to 0.001% or more. Preferably, it is 0.08% or less, and more preferably it is 0.003% or more.

### S: 0.010% or less

S is an element that forms fine precipitates, thereby adversely affecting iron loss characteristics. In particular, if the S content exceeds 0.010%, this adverse effect becomes significant. Therefore, the S content is set to 0.010% or less. More preferably, it is set to 0.008% or less. Although no particular lower limit is imposed, since a steel sheet with an excessively low S content is very expensive, the S content is preferably set to 0.0001% or more. More preferably, it is 0.0003% or more, and further preferably, it is 0.005% or less.

### Al: 3.0% or less

If Al is added in excess, it may promote nitridation of the steel sheet surface, possibly degrading magnetic properties. Therefore, the Al content is set to 3.0% or less. More preferably, it is set to 2.0% or less. In addition, like Si, Al is a useful element having the effect of increasing the specific resistance of steel, thereby reducing iron loss. To obtain this effect, the Al content is preferably 0.005% or more. More preferably, it is 0.010% or more, and further preferably, it is 0.015% or more.

### N: 0.0080% or less

N is an element that forms fine precipitates, thereby adversely affecting iron loss characteristics. In particular, if the N content exceeds 0.0080%, this adverse effect becomes significant. Therefore, the N content is set to 0.0080% or less. Preferably, it is set to 0.0030% or less. Although no particular lower limit is imposed, since a steel sheet with an excessively low N content is very expensive, the N content is preferably 0.0005% or more. More preferably, it is 0.0008% or more.

### O: 0.0050% or less

O (oxygen) is an element that forms nonmetallic inclusions in molten steel, thereby adversely affecting iron loss characteristics. In particular, if the O content exceeds 0.0050%, this adverse effect becomes significant. Therefore, the O content is set to 0.0050% or less. Preferably, it is set to 0.0030% or less. Although no particular lower limit is imposed on the O content, since a steel sheet with an excessively low O content is very expensive, the O content is preferably 0.0005% or more. More preferably, it is 0.0008% or more.

The hot-rolled annealed steel sheet according to this embodiment contains C: 0.010% or less, Si: 1.0% or more and 5.0% or less, Mn: 0.05% or more and 5.0% or less, P: 0.10% or less, S: 0.010% or less, Al: 3.0% or less, N: 0.0080% or less, and O: 0.0050% or less, with the balance being Fe and unavoidable impurities. Furthermore, depending on the required properties, the steel sheet may also contain at least one group of optional elements selected from Groups A to K below, in addition to the foregoing basic chemical composition.

Group A: one or two elements selected from the group consisting of Sn: 0.001% or more and 0.20% or less and Sb: 0.001% or more and 0.20% or less

### Sn: 0.001% or more and 0.20% or less

Sn is an element effective in improving magnetic flux density and reducing iron loss by improving the texture. To obtain this effect, the Sn content may be set to 0.001% or more. Meanwhile, this effect becomes saturated if the Sn content exceeds 0.20%, leading to an unnecessary increase in cost. Therefore, the upper limit of the Sn content is preferably set to 0.20%. Thus, the Sn content is preferably set in the range of 0.001% or more and 0.20% or less.

### Sb: 0.001% or more and 0.20% or less

Sb is an effective element in improving magnetic flux density and reducing iron loss by improving the texture. To achieve this effect, the Sb content may be set to 0.001% or more. On the other hand, this effect becomes saturated if the Sb content exceeds 0.20%, leading to an unnecessary increase in cost. Therefore, the upper limit of the Sb content is preferably 0.20%. Accordingly, the Sb content is preferably in the range of 0.001% or more and 0.20% or less.

Group B: at least one element selected from the group consisting of Ca: 0.0001% or more and 0.10% or less, Mg: 0.0001% or more and 0.10% or less, and REM: 0.0001% or more and 0.10% or less

### Ca: 0.0001% or more and 0.10% or less

Ca is an element that fixes S as sulfides, thereby contributing to reducing iron loss. To obtain this effect, the Ca content may be set to 0.0001% or more. On the other hand, this effect becomes saturated if the Ca content exceeds 0.10%, leading to an unnecessary increase in cost. Therefore, the upper limit of the Ca content is preferably 0.10%. Accordingly, the Ca content is preferably in the range of 0.0001% or more and 0.10% or less.

### Mg: 0.0001% or more and 0.10% or less

Mg is an element that fixes S as sulfides, thereby contributing to reducing iron loss. To obtain this effect, the Mg content may be set to 0.0001% or more. On the other hand, this effect becomes saturated if the Mg content exceeds 0.10%, leading to an unnecessary increase in cost. Therefore, the upper limit of the Mg content is preferably 0.10%. Accordingly, the Mg content is preferably in the range of 0.0001% or more and 0.10% or less.

### REM: 0.0001% or more and 0.10% or less

REM (rare earth metal elements) is a group of elements that fix S as sulfides, thereby contributing to reducing iron loss. To achieve this effect, the REM content may be set to 0.0001% or more. On the other hand, this effect becomes saturated if the REM content exceeds 0.10%, leading to an unnecessary increase in cost. Therefore, the upper limit of the REM content is 0.10%. Accordingly, the REM content is preferably in the range of 0.0001% or more and 0.10% or less.

Group C: one or two elements selected from the group consisting of B: 0.002% or more and 0.20% or less and Mo: 0.002% or more and 0.20% or less

### B: 0.002% or more and 0.20% or less

B forms fine carbides in steel and thus has the effect of increasing the strength of the steel sheet. To obtain this effect, the B content may be set to 0.002% or more. On the other hand, if the B content exceeds 0.20%, excessive carbides are formed, thereby increasing iron loss. Therefore, the upper limit of the B content is preferably 0.20%. Accordingly, the B content is preferably in the range of 0.002% or more and 0.20% or less.

### Mo: 0.002% or more and 0.20% or less

Mo forms fine carbides in steel and thus has the effect of increasing the strength of the steel sheet. To obtain this effect, the Mo content may be set to 0.01% or more. On the other hand, if the Mo content exceeds 0.20%, excessive carbides are formed, thereby increasing iron loss. Therefore, the upper limit of the Mo content is preferably 0.20%. Accordingly, the Mo content is preferably in the range of 0.01% or more and 0.20% or less.

### Group D: Zn: 0.0005% or more and 0.0050% or less

Zn is an effective element in improving magnetic flux density and reducing iron loss by improving the texture. To achieve this effect, the Zn content may be set to 0.0005% or more. On the other hand, this effect becomes saturated if the Zn content exceeds 0.0050%, leading to an unnecessary increase in cost. Therefore, the upper limit of the Zn content is preferably 0.0050%. Accordingly, the Zn content is preferably in the range of 0.0005% or more and 0.0050% or less.

### Group E: Ni: 0.01% or more and 1.0% or less

Ni is an element that improves the toughness of steel and may be added as required. To obtain this effect, the Ni content may be set to 0.01% or more. However, this effect becomes saturated if the Ni content exceeds 1.0%. Therefore, the upper limit of the Ni content is 1.0%. Accordingly, the Ni content is preferably in the range of 0.01% or more and 1.0% or less.

### Group F: Cr: 0.1% or more and 5.0% or less

Cr has the effect of increasing the specific resistance of steel, thereby reducing iron loss. To obtain such an effect, the Cr content may be set to 0.05% or more. On the other hand, if the Cr content exceeds 5.0%, magnetic flux density decreases significantly with a decrease in saturation magnetic flux density. Therefore, the upper limit of the Cr content is 5.0%. Accordingly, the Cr content is preferably in the range of 0.05% or more and 5.0% or less.

### Group G: Cu: 0.005% or more and 1.0% or less

Cu is an element that improves the toughness of steel and may be added as required. To obtain this effect, the Cu content may be set to 0.01% or more. However, this effect becomes saturated if the Cu content exceeds 1.0%. Therefore, when Cu is added, the upper limit of the Cu content is 1.0%. Accordingly, the Cu content is preferably in the range of 0.005% or more and 1.0% or less.

Group H: at least one element selected from the group consisting of Ti: 0.001% or more and 0.010% or less, V: 0.001% or more and 0.050% or less, Nb: 0.001% or more and 0.005% or less, Ta: 0.0001% or more and 0.0020% or less, W: 0.001% or more and 0.050% or less, and Pb: 0.0001% or more and 0.0020% or less

Ti is an element that increases the strength of the steel sheet and may be added as required. To obtain this effect, the Ti content may be set to 0.001% or more. However, if the Ti content exceeds 0.010%, fine precipitates form in the steel sheet, thereby increasing iron loss. Thus, the upper limit of the Ti content is preferably 0.010%.

### V: 0.001% or more and 0.050% or less

V is an element that increases the strength of the steel sheet and may be added as appropriate. To achieve this effect, the V content may be set to 0.001% or more. However, if the V content exceeds 0.050%, fine precipitates form in the steel sheet, thereby increasing iron loss. Therefore, the upper limit of the V content is preferably set to 0.050%.

### Nb: 0.001% or more and 0.005% or less

Nb is an element that increases the strength of the steel sheet and may be added as appropriate. To achieve this effect, the Nb content may be set to 0.001% or more. However, if the Nb content exceeds 0.005%, fine precipitates form in the steel sheet, thereby increasing iron loss. Therefore, the upper limit of the V content is preferably set to 0.005%.

### Ta: 0.0001% or more and 0.0020% or less

Ta is an element that increases the strength of the steel sheet and may be added as necessary. To obtain this effect, the Ta content may be set to 0.0001% or more. However, if the Ta content exceeds 0.0020%, fine precipitates form in the steel sheet, thereby increasing iron loss. Therefore, the upper limit of the Ta content is preferably 0.0020%.

### W: 0.001% or more and 0.050% or less

W is an element that increases the strength of the steel sheet and may be added as necessary. To obtain this effect, the W content may be set to 0.001% or more. However, if the W content exceeds 0.050%, fine precipitates form in the steel sheet, thereby increasing iron loss. Therefore, the upper limit of the W content is preferably 0.050%.

### Pb: 0.0001% or more and 0.0020% or less

Pb is an element that increases the strength of the steel sheet and may be added as necessary. To obtain this effect, the Pb content may be set to 0.0001% or more. However, if the Pb content exceeds 0.0020%, fine precipitates form in the steel sheet, thereby increasing iron loss. Therefore, the upper limit of the Pb content is preferably 0.0020%.

### Group I: Co: 0.001% or more and 0.100% or less

Co is an element that increases the magnetic flux density of the steel sheet and may be added as necessary. To achieve this effect, the Co content may be set to 0.001% or more. However, if the Co content is excessively high, the alloying cost increases. Therefore, the upper limit of the Co content is preferably 0.100%.

Group J: one or two elements selected from the group consisting of Ga: 0.0005% or more and 0.0300% or less and Ge: 0.0005% or more and 0.0300% or less

### Ga: 0.0005% or more and 0.0300% or less

Ga is an element that improves the texture of the steel sheet and thereby increases magnetic flux density, and may be added as necessary. To obtain this effect, the Ga content may be set to 0.0005% or more. However, if the Ga content is excessively high, this effect becomes saturated, and alloying cost increases. Therefore, the upper limit of the Ga content is preferably 0.0300%.

### Ge: 0.0005% or more and 0.0300% or less

Ge is an element that improves the texture of the steel sheet and thereby increases magnetic flux density, and may be added as necessary. To obtain this effect, the Ge content may be set to 0.0005% or more. However, if the Ge content is excessively high, such an effect becomes saturated, and alloying cost increases. Therefore, the upper limit of the Ge content is preferably 0.0300%.

### Group K: As: 0.001% or more and 0.020% or less

As is an element that increases the strength of the steel sheet and may be added as necessary. To obtain this effect, the As content may be set to 0.001% or more. However, if the As content exceeds 0.020%, the risk of fracture during cold rolling increases. Therefore, the upper limit of the As content is preferably 0.020%.

Among the above optional elements, elements whose contents are below their preferable effective ranges do not affect cold rollability or the magnetic properties of the resulting electrical steel sheet product, and are therefore permitted as unavoidable impurities.

### <Microstructure of steel sheet>

Next, the microstructure of the hot-rolled annealed steel sheet according to the present embodiment will be described. Here, the term "recrystallization" refers to the generation and growth of crystal grains with a significantly low dislocation density by holding the material at a high temperature. Recrystallized and unrecrystallized structures can be distinguished by observation under an optical microscope.

### <<Ratio Re/Rc of proportion Re of recrystallized structure at position Xe located 10 mm from outermost edge portion in width direction of the sheet to proportion Rc of recrystallized structure at central portion Xc in width direction of sheet: 0.95 or less>>

According to the studies conducted by the inventors, providing a difference in the proportions of recrystallized structure between the central portion and the edge portion in the width direction of the sheet can suppress fractures and edge cracks during cold rolling more significantly than by simply lowering the overall proportion of recrystallized structure in the hot-rolled annealed steel sheet. The inventors consider the reason to be as follows. Typically, as the proportion of recrystallized structure decreases, the work hardening rate with respect to plastic deformation also decreases. It is presumed that as the work hardening rate of the edge portion of the sheet width is lower than that of the central portion in the width direction of the sheet, stresses have acted during rolling to reduce the tension at the edge portion of the sheet width. This is considered to have significantly suppressed the initiation of cracks at the edge portion of the steel sheet, thereby reducing fractures and edge cracks. That is, by setting the ratio Re/Rc of the hot-rolled annealed steel sheet, which is the ratio of the proportion Re of recrystallized structure at a position Xe located 10 mm from the outermost edge portion of the sheet width in the width direction to the proportion Rc of recrystallized structure at the central portion Xc in the width direction of the sheet, to 0.95 or less, it is possible to obtain a hot-rolled annealed steel sheet in which fractures and edge cracks during cold rolling are sufficiently suppressed. Preferably, the ratio Re/Rc is 0.8 or less, and further preferably, 0.7 or less. Although no particular lower limit is imposed on the ratio Re/Rc, it is typically 0.05 or more in a hot-rolled annealed steel sheet produced using the method described below.

### <<Proportion Rc of recrystallized structure at central portion Xc in width direction of sheet: 80% or more>>

The hot-rolled annealed steel sheet of the present embodiment controls the ratio of the proportion Re of recrystallized structure at the steel sheet position Xe on the edge portion side of the sheet width to the proportion Rc of recrystallized structure at the central portion Xc in the width direction of the sheet. The advantageous effects of the present invention are not limited by the value of the proportion of recrystallized structure at the central portion in the width direction of the sheet. Meanwhile, there exists a preferable range for the proportion of recrystallized structure at the central portion in the width direction of the sheet, within which the advantageous effects of the present invention become more pronounced. When the proportion of recrystallized structure at the central portion Xc in the width direction of the sheet is 80% or more, the magnetic properties of the final product are less likely to deteriorate. Therefore, the proportion Rc of recrystallized structure at the central portion Xc in the width direction of the sheet is more preferably 80% or more.

### <<Proportion Re of recrystallized structure at position Xe on edge portion side of sheet width: range of 5% or more and 95% or less>>

The hot-rolled annealed steel sheet of the present embodiment controls the ratio of the proportion Re of recrystallized structure at the steel sheet position Xe on the edge portion side in the width direction of the sheet to the proportion Rc of recrystallized structure at the central portion Xc in the width direction of the sheet. The advantageous effects of the present invention are not limited by the value of the proportion of recrystallized structure at the steel sheet position Xe. Meanwhile, there exists a preferable range for the proportion of recrystallized structure at the steel sheet position Xe, within which the advantageous effects of the present invention become even more pronounced. In the hot-rolled annealed steel sheet of the present embodiment, when the proportion Re of recrystallized structure at the position Xe on the edge portion side of the sheet width is 5% or more, it is possible to prevent the edge portion of the sheet width from becoming excessively hard, thereby suppressing the initiation of fractures. Meanwhile, when the proportion Re of recrystallized structure at the position Xe on the edge portion side of the sheet width is 95% or less, the above fracture suppression effect achieved by controlling the ratio Re/Rc is more readily and significantly exerted. Accordingly, the proportion Re of recrystallized structure at the position Xe on the edge side of the sheet width is preferably in the range of 5% or more and 95% or less.

### [Production conditions for hot-rolled annealed steel sheet]

A method for producing the hot-rolled annealed steel sheet according to the present embodiment will be described.

The method generally involves sequentially subjecting a steel material having the above chemical composition to hot rolling and hot-rolled sheet annealing to obtain the hot-rolled annealed steel sheet according to the present embodiment. In this embodiment, as long as the chemical composition and the hot-rolled sheet annealing conditions fall within the scope specified in the claims, the remaining steps may be carried out using commonly known methods.

### <Steel material>

The steel material is not particularly limited as long as it is a steel material having the above chemical composition.

The melting method and the component adjustment method for the steel material are also not particularly limited. For example, known melting methods using a converter, an electric furnace, or the like; a vacuum degassing apparatus; and other apparatuses and methods may be adopted. For reasons of productivity and the like, the steel material is preferably cast into a slab (i.e., a steel material) using a continuous casting process after being melted. Alternatively, the steel material may be cast into a slab or a thin slab using a known casting process, such as an ingot making-blooming process or a thin slab continuous casting process.

### <Hot rolling step>

A hot rolling step is a step in which a steel material having the above chemical composition is hot-rolled to form a hot-rolled steel sheet. The hot rolling step is not particularly limited as long as it can obtain a hot-rolled steel sheet of predetermined dimensions by heating and then hot-rolling the steel material having the above composition, and conventional hot rolling steps may be applied.

Examples of the conventional hot rolling step include the following step. For example, a steel material is heated to a temperature in the range of 1000°C or higher and 1200°C or lower. The heated steel material is then hot-rolled at a finishing rolling exit-side temperature in the range of 800°C or higher and 950°C or lower. After the completion of hot rolling, appropriate post-rolling cooling is performed, for example, at an average cooling rate in the range of 20°C/s or more and 100°C/s or less in the temperature range of 450°C or higher and 950°C or lower. The steel sheet is then coiled at a coiling temperature in the range of 400°C or higher and 700°C or lower to form a hot-rolled steel sheet of predetermined dimensions and shape.

### <Hot-rolled sheet annealing step>

A hot-rolled sheet annealing step is a step in which the above hot-rolled steel sheet is annealed by heating the hot-rolled sheet and holding it at a high temperature. More specifically, when the central portion Xc in the width direction of the hot-rolled steel sheet is heated to and held at an appropriate holding temperature T₁ required for recrystallization of the hot-rolled steel sheet, the temperature of the steel sheet position Xe located 10 mm from the outermost edge of the width of the hot-rolled steel sheet in the width direction increases from room temperature to the maximum temperature T₂ lower than the holding temperature T₁. In addition, in the hot-rolled sheet annealing step, the heating rate Vc of the central portion Xc in the width direction of the sheet is set higher than the heating rate Ve of the steel sheet position Xe by 1.0°C/s or more. Preferably, the holding temperature T₁ is 900°C or higher. Preferably, the holding time t₁ at the holding temperature T₁ is in the range of 2 seconds or longer and 120 seconds or shorter. Preferably, the maximum temperature T₂ of the steel sheet position Xe is in the range of 750°C or higher and 1000°C or lower. Preferably, the time t₂ during which the steel sheet position Xe is at the maximum temperature T₂ - 50°C or higher is in the range of 5 seconds or longer and 20 seconds or shorter. Preferably, when a hot-rolled steel sheet having a width W in the range of 900 mm or more and 1100 mm or lower is subjected to the above hot-rolled sheet annealing step, a heating-suppressed region is provided over a range extending from the outermost edge portion to a position located 20 mm or more and 0.250 × W or less inward from the outermost edge portion in the width direction of the sheet.

Typically, a pickling step is performed after the hot-rolled sheet annealing step. The pickling step is not particularly limited as long as the steel sheet after pickling can undergo cold rolling. For example, a conventional pickling step using hydrochloric acid, sulfuric acid, or the like may be applied. This pickling step may be carried out continuously on the same line as the above hot-rolled sheet annealing step or may be performed on a separate line. The hot-rolled annealed steel sheet of the present invention includes both sheets in a non-pickled (mill scale) state and in a pickled (descaled) state.

### <<Heating rate Vc of central portion of Xc in width direction of sheet: higher than heating rate Ve of steel sheet position Xe by 1.0°C/s or more>>

In the hot-rolled sheet annealing step, the heating rate of the central portion Xc in the width direction of the sheet when it is heated from room temperature to the holding temperature T₁ is denoted by Vc. In addition, the heating rate of the steel sheet position Xe, which is located 10 mm from the outermost edge portion of the sheet in the width direction, until it reaches the maximum temperature T₂ from room temperature is denoted by Ve. Then, the following limitation is set: Vc - Ve ≥ 1.0°C/s. If Vc - Ve < 1.0°C/s, the difference in the proportions of recrystallized structure between the central portion in the width direction of the sheet and the edge portion of the sheet width becomes small, making it impossible to set Re/Rc, which is the ratio of the proportion Re of recrystallized structure at the edge position of the sheet width to the proportion Rc of recrystallized structure at the central portion in the width direction of the sheet, to 0.95 or less. Preferably, Vc - Ve ≥ 3°C/s, and more preferably, Vc - Ve ≥ 5°C/s.

### <<Holding temperature T₁ for central portion Xc in width direction of sheet: 900°C or higher>>

In the hot-rolled sheet annealing step, the holding temperature T₁ at the central portion Xc in the width direction of the sheet is preferably 900°C or higher. Setting T₁ to 900°C or higher enables the proportion Rc of recrystallized structure at the central portion Xc in the width direction of the sheet to reach 80% or higher. Although no particular upper limit is imposed on the holding temperature T₁, if T₁ exceeds 1100°C, the edge portion of the sheet width may be heated by thermal conduction, potentially causing the proportion of recrystallized structure at the edge portion of the sheet width to become excessively high. Therefore, it is preferable to control the holding temperature T₁ at the central portion Xc in the width direction of the sheet within the range of 900°C to 1100°C.

### <<Holding time t₁ for central portion Xc in width direction of sheet at holding temperature T₁: 2 seconds or longer and 120 seconds or shorter>>

In the hot-rolled sheet annealing step, the holding time t₁ for the central portion Xc in the width direction of the sheet at the holding temperature T₁ is preferably 2 seconds or longer and 120 seconds or shorter. When t₁ is 120 seconds or shorter, Re/Rc, the ratio of the proportions of recrystallized structure between the edge portion of the sheet width and the central portion in the width direction of the sheet, can be controlled to 0.95 or less, thereby improving cold rollability. In addition, setting the lower limit of the holding time t₁ to 2 seconds ensures sufficient recrystallization and grain growth during hot-rolled sheet annealing, which can improve magnetic properties. Therefore, the holding time t₁ for the central portion Xc in the width direction of the sheet at the holding temperature T₁ is preferably 2 seconds or longer and 120 seconds or shorter.

### <<Maximum temperature T₂ of steel sheet position Xe: set in range of 750°C or higher and 1000°C or lower>>

In the hot-rolled sheet annealing step, the maximum temperature T₂ at the steel sheet position Xe, which is located 10 mm from the outermost edge portion of the width of the hot-rolled steel sheet in the width direction, is preferably set to 750°C or higher and 1000°C or lower. When the maximum temperature T₂ is 750°C or higher, sufficient recrystallization can be achieved at the steel sheet position Xe, and the proportion Re of recrystallized structure at the steel sheet position Xe satisfies 5% or more. Meanwhile, when the maximum temperature T₂ is 1000°C or lower, the proportion Re of recrystallized structure at the steel sheet position Xe becomes 95% or less. Accordingly, the maximum temperature T₂ reached at the steel sheet position Xe is preferably 750°C or higher and 1000°C or lower. The maximum temperature T₂ reached at the steel sheet position Xe needs to be lower than the holding temperature T₁ for the central portion Xc in the width direction of the sheet. Otherwise, the proportion Re of recrystallized structure at the steel sheet position Xe would become higher than the proportion Rc of recrystallized structure at the central portion Xc in the width direction of the sheet.

### <<Time t₂ during which steel sheet position Xe is at maximum temperature T₂ - 50°C or higher: set in range of 5 seconds or longer and 20 seconds or shorter>>

In the hot-rolled sheet annealing step, the time t₂ during which the steel sheet position Xe is at the maximum temperature T₂ - 50°C or higher is preferably set in the range of 5 seconds or longer and 20 seconds or shorter. Note that t₂ represents the total time including the time required to heat the steel sheet position Xe to the maximum temperature T₂ and the time required to cool it from the maximum temperature T₂. When t₂ is 5 seconds or longer, sufficient time is ensured for the steel sheet position Xe to be cooled after reaching the maximum temperature T₂, thereby allowing recrystallization to proceed adequately and thus allowing the proportion Re of recrystallized structure to be 5% or more. When t₂ is 20 seconds or shorter, recrystallization proceeds adequately, thereby allowing the proportion Re of recrystallized structure to be 95% or less.

### <<Provision of heating-suppressed region extending 20 mm or more from outermost edge portion in width direction of sheet >>

In the hot-rolled sheet annealing step, the following methods can be used, for example, to provide a heating-suppressed region that intentionally introduces a temperature gradient in the sheet width direction: (i) reducing burner heating only at the edge portion to prevent overheating, (ii) providing an edge cover to prevent heating, (iii) applying a temperature-rise prevention material that can suppress radiation heating with low emissivity, and (iv) removing mill scale only from the edge portion to reduce emissivity, thereby preventing a temperature rise. Any method that can intentionally introduce a temperature gradient may be employed, and the method does not limit the scope of the invention. The heating-suppressed region is preferably provided over a range extending 20 mm or more in the width direction from the outermost edge portion of the sheet. When the heating-suppressed region extends 20 mm or more in the width direction from the outermost edge portion of the sheet, the temperature at the steel sheet position Xe located 10 mm from the outermost edge portion is less likely to increase due to heat conduction in the steel sheet. Therefore, the heating rate Vc at the central portion Xc in the width direction of the sheet can be made higher than the heating rate Ve at the steel sheet position Xe by 1.0°C/s or more. Meanwhile, regarding the upper limit of the heating-suppressed region, when a hot-rolled steel sheet with a width W in the range of 900 mm to 1100 mm is subjected to the hot-rolled sheet annealing step, it is preferable to provide the heating-suppressed region over a range extending from the outermost edge portion to a position of 0.250 × W or less in the width direction of the sheet. Within this range, the proportion of recrystallized structure in the entire steel sheet is sufficient, thereby suppressing deterioration of magnetic properties. Therefore, the heating-suppressed region is preferably provided within a range extending 20 mm or more from the outermost edge portion in the width direction of the sheet. When a hot-rolled steel sheet having a width W of 900 mm to 1100 mm is subjected to hot-rolled sheet annealing, the heating-suppressed region preferably extends to 0.250 × W or less from the outermost edge portion of the sheet in the width direction.

### <Pickling step>

A pickling step is a step in which the hot-rolled annealed steel sheet obtained after the hot-rolled sheet annealing step is pickled. The pickling step is not particularly limited as long as the steel sheet after pickling can undergo cold rolling. For example, a conventional pickling step using hydrochloric acid, sulfuric acid, or the like may be applied. When the hot-rolled sheet annealing step is performed, this pickling step may be carried out continuously on the same line as the above hot-rolled sheet annealing step or may be performed on a separate line.

### <Cold rolling step>

A cold rolling step is a step in which the hot-rolled annealed steel sheet that has undergone pickling (pickled steel sheet) is cold rolled. In the cold rolling step, cold rolling is performed on the hot-rolled annealed steel sheet after pickling to obtain a cold-rolled steel sheet. The cold rolling step is not particularly limited as long as a cold-rolled steel sheet of predetermined dimensions can be obtained. Therefore, a conventional cold rolling step may be applied.

Examples of the conventional cold rolling step include a cold rolling step in which the pickled steel sheet is rolled using a 5-stand tandem mill at a total rolling reduction of 80% or more but less than 95%, thereby producing a cold-rolled steel sheet having predetermined dimensions and shape. The number of stands may be four or fewer, or six or more.

### <Finishing annealing step>

A finishing annealing step is a step in which the cold-rolled steel sheet that has undergone the cold rolling step is annealed to obtain a cold-rolled annealed steel sheet. The finishing annealing step is not particularly limited as long as a cold-rolled annealed steel sheet can be obtained by heating, holding, and cooling the cold-rolled steel sheet. Therefore, a conventional annealing step may be applied. It should be noted that an insulating coating may be applied to the surface after the finishing annealing step. The method and type of the insulating coating are not particularly limited, and a conventional insulating coating step may be applied.

Examples of the conventional annealing step include a finishing annealing step in which the cold-rolled steel sheet is heated to a temperature of 800°C or higher and 1200°C or lower in a non-oxidizing atmosphere, held for 5 seconds or longer and 60 seconds or shorter, and then cooled.

### Examples

The present invention will be specifically described below by way of Examples. However, the present invention is not limited thereto.

### <Production of hot-rolled annealed steel sheet>

Molten steel having a chemical composition shown in Table 1 was produced by a commonly known method and then continuously cast into a slab (steel material) having a thickness of 230 mm. The resulting slab was hot-rolled to obtain a hot-rolled steel sheet having a thickness of 2.0 mm. The hot-rolled steel sheet was subjected to hot-rolled sheet annealing and pickling under the conditions shown in Tables 2-1 and 2-2 to obtain a hot-rolled annealed steel sheet (pickled steel sheet).

### <Production of cold-rolled steel sheet>

The hot-rolled annealed steel sheet (pickled steel sheet) was cold-rolled to a thickness of 0.25 mm at room temperature using a tandem mill to obtain a cold-rolled steel sheet.

### <Production of cold-rolled annealed steel sheet>

The cold-rolled steel sheet was subjected to finishing annealing by a known method, which involves holding the steel sheet at 1000°C for 10 seconds in a non-oxidizing atmosphere, followed by coating using a known method. A cold-rolled annealed steel sheet (non-oriented electrical steel sheet) was obtained.

**[Table 1]**

| Steel No. | Component Composition (mass%) | | | | | | | | | Remarks |
|---|---|---|---|---|---|---|---|---|---|---|
| | C | Si | Mn | P | S | Al | N | O | Others | |
| A | 0.002 | 3.0 | 0.22 | 0.01 | 0.002 | 1.1 | 0.0026 | 0.0017 | - | Invention Steel |
| B | 0.005 | 3.2 | 0.25 | 0.01 | 0.003 | 0.9 | 0.0019 | 0.0013 | - | Invention Steel |
| C | 0.010 | 3.1 | 0.18 | 0.01 | 0.003 | 0.9 | 0.0019 | 0.0011 | - | Invention Steel |
| D | *0.015* | 2.9 | 0.21 | 0.02 | 0.003 | 1.1 | 0.0019 | 0.0011 | - | Conventional Steel |
| E | 0.002 | *0.9* | 0.23 | 0.01 | 0.002 | 0.9 | 0.0017 | 0.0016 | - | Conventional Steel |
| F | 0.002 | 1.1 | 0.23 | 0.01 | 0.003 | 0.9 | 0.0023 | 0.0016 | - | Invention Steel |
| G | 0.002 | 2.1 | 0.24 | 0.01 | 0.002 | 1.0 | 0.0022 | 0.0010 | - | Invention Steel |
| H | 0.002 | 4.8 | 0.18 | 0.01 | 0.002 | 1.0 | 0.0018 | 0.0015 | - | Invention Steel |
| I | 0.002 | *5.1* | 0.22 | 0.02 | 0.002 | 0.9 | 0.0018 | 0.0010 | - | Conventional Steel |
| J | 0.002 | 2.8 | *0.04* | 0.01 | 0.003 | 1.1 | 0.0024 | 0.0012 | - | Conventional Steel |
| K | 0.002 | 3.1 | 0.06 | 0.01 | 0.003 | 0.9 | 0.0015 | 0.0009 | - | Invention Steel |
| L | 0.002 | 2.9 | 0.50 | 0.01 | 0.003 | 1.1 | 0.0017 | 0.0017 | - | Invention Steel |
| M | 0.002 | 2.8 | 4.9 | 0.01 | 0.002 | 0.9 | 0.0018 | 0.0009 | - | Invention Steel |
| N | 0.002 | 3.2 | 5.1 | 0.01 | 0.004 | 0.9 | 0.0018 | 0.0016 | - | Conventional Steel |
| O | 0.002 | 2.9 | 0.23 | 0.05 | 0.002 | 0.9 | 0.0024 | 0.0014 | - | Invention Steel |
| P | 0.002 | 3.0 | 0.25 | 0.09 | 0.002 | 0.9 | 0.0016 | 0.0009 | - | Invention Steel |
| Q | 0.002 | 3.0 | 0.23 | *0.11* | 0.002 | 1.0 | 0.0016 | 0.0013 | - | Conventional Steel |
| R | 0.002 | 3.1 | 0.19 | 0.01 | 0.005 | 1.0 | 0.0020 | 0.0009 | - | Invention Steel |
| S | 0.002 | 3.0 | 0.26 | 0.01 | 0.010 | 0.9 | 0.0021 | 0.0009 | - | Invention Steel |
| T | 0.002 | 3.0 | 0.21 | 0.01 | *0.011* | 1.0 | 0.0026 | 0.0009 | - | Conventional Steel |
| U | 0.002 | 2.9 | 0.22 | 0.01 | 0.003 | 1.5 | 0.0015 | 0.0014 | - | Invention Steel |
| V | 0.002 | 2.8 | 0.22 | 0.01 | 0.003 | 2.9 | 0.0022 | 0.0012 | - | Invention Steel |
| W | 0.002 | 2.9 | 0.26 | 0.01 | 0.002 | *3.1* | 0.0017 | 0.0009 | - | Conventional Steel |
| X | 0.002 | 3.1 | 0.23 | 0.01 | 0.002 | 1.1 | 0.0026 | 0.0008 | - | Invention Steel |
| Y | 0.002 | 3.1 | 0.26 | 0.01 | 0.003 | 0.9 | 0.0026 | 0.0011 | - | Invention Steel |
| Z | 0.002 | 2.8 | 0.25 | 0.01 | 0.003 | 1.0 | *0.0100* | 0.0012 | - | Conventional Steel |
| AA | 0.002 | 2.9 | 0.20 | 0.01 | 0.002 | 1.1 | 0.0025 | 0.0032 | - | Invention Steel |
| AB | 0.002 | 2.8 | 0.19 | 0.01 | 0.003 | 1.0 | 0.0025 | 0.0049 | - | Invention Steel |
| AC | 0.003 | 2.9 | 0.25 | 0.01 | 0.002 | 1.0 | 0.0023 | 0.0055 | - | Conventional Steel |
| AD | 0.002 | 3.0 | 0.20 | 0.01 | 0.003 | 1.1 | 0.0027 | 0.0016 | Sn:0.15, Sb:0.15, Ca:0.08, Mg:0.08, REM:0.08, B:0.15, Mo:0.15, Zn:0.0045, Ni:0.8, Cr:1.2, Cu:0.9 | Invention Steel |
| AE | 0.002 | 3.0 | 0.26 | 0.01 | 0.001 | 1.0 | 0.0023 | 0.0016 | - | Invention Steel |
| AF | 0.002 | 3.1 | 0.24 | 0.01 | 0.002 | 0.005 | 0.0018 | 0.0010 | - | Invention Steel |
| AG | 0.002 | 3.1 | 0.21 | 0.01 | 0.003 | 1.1 | 0.0017 | 0.0017 | Ti:0.005, V:0.03, Nb:00.003, Ta:0.001, W:0.03, Pb:0.001, Co:0.05, Ga:0.01, Ge:0.01, As:0.01 | Invention Steel |

| | | | | | | | | | | |
|---|---|---|---|---|---|---|---|---|---|---|
| Note: "-" represents that other components are contained at the unavoidable impurity level. Italic, underlined portions represent that the relevant steel or numerical value is outside the scope of the present invention. | | | | | | | | | | |

**[Table 2-1]**

| Process No. | Steel No. | Vc | Ve | Vc - Ve | T₁ | T₂ | t₁ | t₂ | X1 | Method for suppressing heating of edge portion | Remarks |
|---|---|---|---|---|---|---|---|---|---|---|---|
| | | °C /s | °C /s | °C /s | °C | °C | s | s | mm | | |
| 1 | A | 41.2 | 40.3 | *0.9* | 979 | 818 | 20 | 11 | 30 | Edge masking | Comparative Example |
| 2 | A | 35.3 | 34.0 | 1.3 | 1017 | 848 | 13 | 14 | 50 | Edge masking | Invention Example |
| 3 | A | 32.2 | 26.8 | 5.4 | 973 | 841 | 11 | 11 | 60 | Edge masking | Invention Example |
| 4 | A | 16.6 | 8.5 | 8.1 | 894 | 834 | 17 | 9 | 30 | Edge masking | Invention Example |
| 5 | A | 37.4 | 29.0 | 8.4 | 902 | 824 | 29 | 12 | 40 | Edge masking | Invention Example |
| 6 | A | 15.2 | 7.0 | 8.2 | 996 | 745 | 21 | 12 | 40 | Edge masking | Invention Example |
| 7 | A | 27.0 | 19.1 | 7.9 | 1023 | 755 | 22 | 16 | 40 | Edge masking | Invention Example |
| 8 | A | 21.5 | 14.1 | 7.4 | 1047 | 993 | 13 | 13 | 60 | Edge masking | Invention Example |
| 9 | A | 24.2 | 16.5 | 7.7 | 1006 | *1010* | 20 | 15 | 30 | Edge masking | Comparative Example |
| 10 | A | 32.1 | 23.6 | 8.5 | 1032 | 811 | 1 | 16 | 50 | Edge masking | Invention Example |
| 11 | A | 25.4 | 18.9 | 6.5 | 1040 | 845 | 2 | 13 | 30 | Edge masking | Invention Example |
| 12 | A | 21.1 | 12.9 | 8.2 | 969 | 848 | 118 | 9 | 40 | Edge masking | Invention Example |
| 13 | A | 28.6 | 20.4 | 8.2 | 1045 | 843 | *125* | 11 | 40 | Edge masking | Comparative Example |
| 14 | A | 21.3 | 13.9 | 7.4 | 992 | 805 | 23 | 4 | 40 | Edge masking | Invention Example |
| 15 | A | 18.9 | 10.6 | 8.3 | 991 | 823 | 28 | 5 | 30 | Edge masking | Invention Example |
| 16 | A | 32.8 | 25.9 | 6.9 | 1001 | 832 | 29 | 20 | 50 | Edge masking | Invention Example |
| 17 | A | 43.6 | 36.6 | 7.0 | 1001 | 822 | 14 | *22* | 40 | Edge masking | Comparative Example |
| 18 | A | 22.3 | 15.3 | 7.0 | 1022 | 836 | 18 | 14 | *15* | Edge masking | Comparative Example |
| 19 | A | 29.1 | 21.0 | 8.1 | 1017 | 816 | 29 | 13 | 20 | Edge masking | Invention Example |
| 20 | A | 24.2 | 17.0 | 7.2 | 957 | 812 | 29 | 14 | 245 | Edge masking | Invention Example |
| 21 | A | 23.1 | 15.7 | 7.4 | 1016 | 825 | 18 | 12 | 255 | Edge masking | Invention Example |
| 22 | B | 21.6 | 14.8 | 6.8 | 971 | 817 | 29 | 9 | 50 | Edge masking | Invention Example |
| 23 | C | 32.1 | 24.7 | 7.4 | 1006 | 820 | 16 | 10 | 50 | Edge masking | Invention Example |
| 24 | *D* | 20.8 | 13.3 | 7.5 | 1027 | 835 | 13 | 8 | 60 | Edge masking | Comparative Example |
| 25 | *E* | 23.0 | 16.1 | 6.9 | 1014 | 842 | 10 | 11 | 50 | Edge masking | Comparative Example |
| 26 | F | 43.7 | 35.3 | 8.4 | 973 | 810 | 23 | 10 | 40 | Edge masking | Invention Example |
| 27 | G | 27.8 | 21.3 | 6.5 | 1035 | 821 | 23 | 10 | 60 | Edge masking | Invention Example |
| 28 | H | 37.1 | 29.6 | 7.5 | 997 | 844 | 20 | 8 | 50 | Edge masking | Invention Example |
| 29 | *I* | 19.9 | 12.6 | 7.3 | 987 | 828 | 29 | 9 | 60 | Edge masking | Comparative Example |
| 30 | *J* | 40.7 | 33.3 | 7.4 | 1015 | 827 | 23 | 12 | 40 | Edge masking | Comparative Example |

| | | | | | | | | | | | |
|---|---|---|---|---|---|---|---|---|---|---|---|
| Italic, underlined portions represent that the relevant steel or numerical value is outside the scope of the present invention. | | | | | | | | | | | |

**[Table 2-2]**

| Process No. | Steel No. | Vc | Ve | Vc - Ve | T₁ | T₂ | t₁ | t₂ | X1 | Method for Suppressing Heating of Edge Portion | Remarks |
|---|---|---|---|---|---|---|---|---|---|---|---|
| | | °C /s | °C /s | °C /s | °C | °C | s | s | mm | | |
| 31 | K | 38.8 | 30.6 | 8.2 | 992 | 827 | 13 | 14 | 40 | Edge masking | Invention Example |
| 32 | L | 43.9 | 35.7 | 8.2 | 994 | 811 | 21 | 14 | 40 | Edge masking | Invention Example |
| 33 | M | 44.9 | 38.4 | 6.5 | 998 | 808 | 15 | 10 | 60 | Edge masking | Invention Example |
| 34 | *N* | 28.0 | 21.0 | 7.0 | 954 | 841 | 28 | 8 | 30 | Edge masking | Comparative Example |
| 35 | O | 18.0 | 10.8 | 7.2 | 984 | 818 | 14 | 10 | 50 | Edge masking | Invention Example |
| 36 | P | 36.3 | 28.1 | 8.2 | 954 | 820 | 26 | 14 | 60 | Edge masking | Invention Example |
| 37 | *O* | 42.8 | 35.3 | 7.5 | 1018 | 807 | 21 | 13 | 40 | Edge masking | Comparative Example |
| 38 | R | 18.4 | 11.4 | 7.0 | 1021 | 840 | 21 | 10 | 30 | Edge masking | Invention Example |
| 39 | S | 39.1 | 31.3 | 7.8 | 1042 | 830 | 30 | 14 | 50 | Edge masking | Invention Example |
| 40 | *T* | 18.0 | 11.4 | 6.6 | 1017 | 833 | 17 | 14 | 30 | Edge masking | Comparative Example |
| 41 | U | 44.6 | 37.8 | 6.8 | 1001 | 801 | 21 | 14 | 60 | Edge masking | Invention Example |
| 42 | V | 15.3 | 7.1 | 8.2 | 1033 | 804 | 10 | 8 | 50 | Edge masking | Invention Example |
| 43 | *W* | 34.7 | 26.2 | 8.5 | 974 | 812 | 15 | 8 | 50 | Edge masking | Comparative Example |
| 44 | X | 28.8 | 21.9 | 6.9 | 972 | 804 | 29 | 9 | 30 | Edge masking | Invention Example |
| 45 | Y | 22.8 | 14.9 | 7.9 | 1047 | 806 | 12 | 16 | 30 | Edge masking | Invention Example |
| 46 | Z | 30.7 | 23.3 | 7.4 | 1035 | 839 | 10 | 11 | 50 | Edge masking | Comparative Example |
| 47 | AA | 42.2 | 35.2 | 7.0 | 1003 | 812 | 17 | 13 | 60 | Edge masking | Invention Example |
| 48 | AB | 23.6 | 16.0 | 7.6 | 1018 | 815 | 19 | 11 | 50 | Edge masking | Invention Example |
| 49 | *AC* | 15.3 | 7.0 | 8.3 | 1006 | 811 | 19 | 10 | 60 | Edge masking | Comparative Example |
| 50 | AD | 17.4 | 10.1 | 7.3 | 981 | 845 | 30 | 10 | 50 | Edge masking | Invention Example |
| 51 | AE | 38.8 | 30.6 | 8.2 | 992 | 827 | 13 | 14 | 40 | Edge masking | Invention Example |
| 52 | AF | 18.4 | 11.4 | 7.0 | 1021 | 840 | 21 | 10 | 30 | Edge masking | Invention Example |
| 53 | A | 29.5 | 22.2 | 7.3 | 999 | 850 | 27 | 13 | 60 | Removing Scale bv Grinding | Invention Example |
| 54 | B | 39.2 | 30.9 | 8.3 | 999 | 840 | 20 | 9 | 40 | Removing Scale bv Grinding | Invention Example |
| 55 | C | 29.4 | 20.9 | 8.5 | 979 | 801 | 22 | 10 | 40 | Removing Scale bv Grinding | Invention Example |
| 56 | *D* | 35.6 | 27.1 | 8.5 | 999 | 840 | 24 | 14 | 30 | Removing Scale bv Grinding | Comparative Example |
| 57 | *E* | 18.8 | 12.1 | 6.7 | 1002 | 801 | 20 | 12 | 40 | Removing Scale bv Grinding | Comparative Example |
| 58 | F | 44.5 | 36.3 | 8.2 | 1031 | 824 | 10 | 9 | 50 | Removing Scale bv Grinding | Invention Example |
| 59 | AG | 43.9 | 35.4 | 8.5 | 974 | 817 | 29 | 14 | 40 | Edge masking | Invention Example |

| | | | | | | | | | | | |
|---|---|---|---|---|---|---|---|---|---|---|---|
| Italic, underlined portions represent that the relevant steel or numerical value is outside the scope of the present invention. | | | | | | | | | | | |

### <Evaluation>

### <<Microstructural Observation>>

Test specimens for microstructural observation were taken from the hot-rolled annealed steel sheet thus obtained, namely, from the central portion in the width direction of the sheet and a position 10 mm from the outermost edge of the sheet width. Each test specimen was embedded in resin such that its cross-section in the thickness direction served as the observation plane, and was observed under an optical microscope to measure the proportion of recrystallized structure.

### <<Evaluation of rollability>>

The number of edge cracks per 1000 m of sheet length was determined for the cold-rolled steel sheet. Edge cracks having a length of 2 mm or more were counted as N. Cold rollability was evaluated as good when the number of edge cracks per 1000 m of sheet length was 2.0 or less.

### <<Evaluation of magnetic properties>>

Test specimens for magnetic measurement, each measuring 30 mm in width and 280 mm in length, were taken from both the rolling direction and the direction perpendicular to the rolling direction, with the longitudinal direction of each specimen aligned accordingly. The magnetic flux density B50 and the iron loss W_{10/400} of the cold-rolled annealed steel sheet were measured using the Epstein method in accordance with JIS C2550-1: 2011. The magnetic flux density was evaluated as good when B50 ≥ 1.55T. The iron loss properties were evaluated as good when W_{10/400} ≤ 14.0 W/kg after annealing.

In the evaluation column, regarding cold rollability, samples that fractured during rolling, as well as those having more than 2.0 edge cracks per 1000 m of cold-rolled steel sheet length were evaluated as "Poor." In addition, samples having chemical compositions outside the scope of the present invention that, regardless of the hot-rolled sheet annealing conditions, had a magnetic flux density B50 of less than 1.55 T or an iron loss W_{10/400} exceeding 14.0 W/kg were evaluated as "Poor." Of the remaining samples, those having a magnetic flux density B50 of 1.55 T or more and an iron loss W_{10/400} of 14.0 W/kg or less were evaluated as "Excellent," and the rest were evaluated as "Good."

**[Table 3-1]**

| Process No. | Rc | Re | Re/Rc | Fracture During Cold Rolling | Number N of Edge Cracks | B50 | W_{10/400} | Evaluation | Remarks |
|---|---|---|---|---|---|---|---|---|---|
| | % | % | % | Present/ Absent | Number | T | W/kg | | |
| 1 | 99 | 96 | *0.97* | - | 2.4 | 1.59 | 12.5 | Poor | Comparative Example |
| 2 | 100 | 92 | 0.92 | - | 1.2 | 1.54 | 12.7 | Good | Invention Example |
| 3 | 99 | 74 | 0.75 | - | 0.4 | 1.64 | 12.1 | Excellent | Invention Example |
| 4 | 75 | 47 | 0.63 | - | 0 | 1.62 | 14.1 | Good | Invention Example |
| 5 | 82 | 51 | 0.62 | - | 0 | 1.56 | 13.8 | Excellent | Invention Example |
| 6 | 81 | 4 | 0.05 | - | 1.8 | 1.54 | 12.5 | Good | Invention Example |
| 7 | 83 | 12 | 0.14 | - | 1.9 | 1.57 | 12.2 | Excellent | Invention Example |
| 8 | 96 | 81 | 0.84 | - | 1.6 | 1.67 | 12.3 | Excellent | Invention Example |
| 9 | 100 | 97 | *0.97* | - | 2.3 | 1.67 | 12.7 | Poor | Comparative Example |
| 10 | 77 | 52 | 0.67 | - | 0 | 1.65 | 14.2 | Good | Invention Example |
| 11 | 84 | 50 | 0.60 | - | 0 | 1.56 | 13.7 | Excellent | Invention Example |
| 12 | 96 | 84 | 0.88 | - | 1.5 | 1.65 | 12.7 | Excellent | Invention Example |
| 13 | 100 | 98 | *0.98* | - | 2.2 | 1.60 | 12.3 | Poor | Comparative Example |
| 14 | 82 | 4 | 0.05 | - | 1.9 | 1.60 | 11.6 | Excellent | Invention Example |
| 15 | 86 | 8 | 0.09 | - | 1.9 | 1.62 | 11.9 | Excellent | Invention Example |
| 16 | 100 | 88 | 0.88 | - | 1.6 | 1.62 | 11.6 | Excellent | Invention Example |
| 17 | 100 | 96 | *0.96* | - | 2.4 | 1.67 | 11.6 | Poor | Comparative Example |
| 18 | 100 | 97 | *0.97* | - | 2.8 | 1.70 | 11.6 | Poor | Comparative Example |
| 19 | 100 | 87 | 0.87 | - | 0 | 1.56 | 11.6 | Excellent | Invention Example |
| 20 | 95 | 67 | 0.70 | - | 0 | 1.67 | 13.7 | Excellent | Invention Example |
| 21 | 75 | 48 | 0.64 | - | 0 | 1.62 | 14.2 | Good | Invention Example |
| 22 | 97 | 68 | 0.70 | - | 0 | 1.60 | 12.7 | Excellent | Invention Example |
| 23 | 95 | 64 | 0.67 | - | 0 | 1.59 | 13.6 | Excellent | Invention Example |
| 24 | 96 | 62 | 0.65 | - | 0 | 1.64 | 14.4 | Poor | Comparative Example |
| 25 | 100 | 66 | 0.66 | - | 0 | 1.72 | 16.3 | Poor | Comparative Example |
| 26 | 98 | 66 | 0.67 | - | 0 | 1.68 | 13.9 | Excellent | Invention Example |
| 27 | 100 | 65 | 0.65 | - | 0 | 1.70 | 13.2 | Excellent | Invention Example |
| 28 | 95 | 62 | 0.65 | - | 1.3 | 1.56 | 10.4 | Excellent | Invention Example |
| 29 | 98 | 69 | 0.70 | - | 1.9 | 1.52 | 10.1 | Poor | Comparative Example |
| 30 | 100 | 67 | 0.67 | - | 0 | 1.61 | 14.3 | Poor | Comparative Example |

| | | | | | | | | | |
|---|---|---|---|---|---|---|---|---|---|
| Italic, underlined portions represent that the relevant steel or numerical value is outside the scope of the present invention. | | | | | | | | | |

**[Table 3-2]**

| Process No. | Rc | Re | Re/Rc | Fracture During Cold Rolling | Number N of Edge Cracks | B50 | W_{10/400} | Evaluation | Remarks |
|---|---|---|---|---|---|---|---|---|---|
| | % | % | % | Present/ Absent | Number | T | W/kg | | |
| 31 | 95 | 61 | 0.64 | - | 0 | 1.67 | 13.5 | Excellent | Invention Example |
| 32 | 96 | 60 | 0.62 | - | 0 | 1.65 | 11.5 | Excellent | Invention Example |
| 33 | 97 | 66 | 0.68 | - | 0 | 1.48 | 12.9 | Good | Invention Example |
| 34 | 99 | 69 | 0.70 | - | 0 | 1.52 | 14.3 | Poor | Comparative Example |
| 35 | 96 | 60 | 0.63 | - | 0.5 | 1.66 | 11.8 | Excellent | Invention Example |
| 36 | 99 | 67 | 0.68 | - | 1.7 | 1.58 | 11.3 | Excellent | Invention Example |
| 37 | 98 | 69 | 0.70 | *Present* | 3.1 | 1.62 | 11.8 | Poor | Comparative Example |
| 38 | 99 | 68 | 0.69 | - | 0 | 1.56 | 13.1 | Excellent | Invention Example |
| 39 | 95 | 66 | 0.69 | | 0 | 1.71 | 13.9 | Excellent | Invention Example |
| 40 | 99 | 62 | 0.63 | - | 0 | 1.64 | 14.5 | Poor | Comparative Example |
| 41 | 99 | 60 | 0.61 | - | 0.3 | 1.68 | 10.9 | Excellent | Invention Example |
| 42 | 99 | 61 | 0.62 | - | 1.1 | 1.57 | 13.7 | Excellent | Invention Example |
| 43 | 98 | 68 | 0.69 | - | 1.7 | 1.63 | 14.2 | Poor | Comparative Example |
| 44 | 98 | 69 | 0.70 | - | 0 | 1.70 | 12.1 | Excellent | Invention Example |
| 45 | 96 | 62 | 0.65 | - | 0 | 1.71 | 13.8 | Excellent | Invention Example |
| 46 | 96 | 60 | 0.63 | - | 0 | 1.66 | 14.5 | Poor | Comparative Example |
| 47 | 97 | 62 | 0.64 | - | 0 | 1.63 | 12.2 | Excellent | Invention Example |
| 48 | 99 | 61 | 0.62 | - | 0 | 1.66 | 13.6 | Excellent | Invention Example |
| 49 | 98 | 69 | 0.70 | - | 0 | 1.71 | 14.1 | Poor | Comparative Example |
| 50 | 95 | 67 | 0.70 | - | 0 | 1.63 | 11.9 | Excellent | Invention Example |
| 51 | 95 | 66 | 0.69 | - | 0 | 1.65 | 13.1 | Excellent | Invention Example |
| 52 | 96 | 62 | 0.65 | - | 0 | 1.72 | 12.9 | Excellent | Invention Example |
| 53 | 100 | 70 | 0.70 | - | 0 | 1.70 | 12.2 | Excellent | Invention Example |
| 54 | 96 | 61 | 0.64 | - | 0 | 1.60 | 12.4 | Excellent | Invention Example |
| 55 | 97 | 63 | 0.65 | - | 0 | 1.54 | 13.8 | Good | Invention Example |
| 56 | 95 | 57 | 0.60 | - | 0 | 1.71 | 14.1 | Poor | Comparative Example |
| 57 | 96 | 65 | 0.68 | - | 0 | 1.64 | 17.1 | Poor | Comparative Example |
| 58 | 99 | 63 | 0.64 | - | 0 | 1.64 | 13.7 | Excellent | Invention Example |
| 59 | 96 | 61 | 0.65 | - | 0 | 1.71 | 12.2 | Excellent | Invention Example |

| | | | | | | | | | |
|---|---|---|---|---|---|---|---|---|---|
| Italic, underlined portions represent that the relevant steel or numerical value is outside the scope of the present invention. | | | | | | | | | |

From the results in Tables 3-1 and 3-2, it is found that the hot-rolled annealed steel sheets according to the present invention all have excellent cold rollability, and furthermore, the cold-rolled annealed steel sheets obtained by performing cold rolling and annealing on the hot-rolled annealed steel sheets according to the present invention have excellent magnetic properties.

## Claims

1. A hot-rolled annealed steel sheet having a chemical composition comprising, in mass%:
C: 0.010% or less,
Si: 1.0% or more and 5.0% or less,
Mn: 0.05% or more and 5.0% or less,
P: 0.10% or less,
S: 0.010% or less,
Al: 3.0% or less,
N: 0.0080% or less, and
O: 0.0050% or less,
and further optionally comprising at least one group selected from:
Group A: one or two elements selected from the group consisting of Sn: 0.001% or more and 0.20% or less and Sb: 0.001% or more and 0.20% or less,
Group B: at least one element selected from the group consisting of Ca: 0.0001% or more and 0.10% or less, Mg: 0.0001% or more and 0.10% or less, and REM: 0.0001% or more and 0.10% or less,
Group C: one or two elements selected from the group consisting of B: 0.002% or more and 0.20% or less and Mo: 0.002% or more and 0.20% or less, Group D: Zn: 0.0005% or more and 0.0050% or less,
Group E: Ni: 0.01% or more and 1.0% or less,
Group F: Cr: 0.1% or more and 5.0% or less,
Group G: Cu: 0.005% or more and 1.0% or less, Group H: at least one element selected from the group consisting of Ti: 0.001% or more and 0.010% or less, V: 0.001% or more and 0.050% or less, Nb: 0.001% or more and 0.005% or less, Ta: 0.0001% or more and 0.0020% or less, W: 0.001% or more and 0.050% or less, and Pb: 0.0001% or more and 0.0020% or less,
Group I: Co: 0.001% or more and 0.100% or less,
Group J: one or two elements selected from the group consisting of Ga: 0.0005% or more and 0.0300% or less and Ge: 0.0005% or more and 0.0300% or less, and
Group K: As: 0.001% or more and 0.020% or less,
with the balance being Fe and unavoidable impurities,
**characterized in that**:
a ratio Re/Rc is 0.95 or less, the ratio Re/Rc being a ratio of a proportion Re of recrystallized structure at a steel sheet position Xe located 10 mm from an outermost edge of the steel sheet in a width direction to a proportion Rc of recrystallized structure at a central portion Xc in the width direction of the sheet.

2. The hot-rolled annealed steel sheet according to claim 1, wherein one or both of conditions below are satisfied:
the proportion Rc of recrystallized structure at the central portion Xc in the width direction of the sheet is 80% or more, and
the proportion Re of recrystallized structure at the steel sheet position Xe is in a range of 5% or more and 95% or less.

3. A method for producing the hot-rolled annealed steel sheet according to claim 1 or 2, comprising:
a hot rolling step in which a steel material having the chemical composition is hot rolled to obtain a hot-rolled steel sheet, and
a hot-rolled sheet annealing step in which the hot-rolled steel sheet is subjected to hot-rolled sheet annealing,
**characterized in that**, in the hot-rolled sheet annealing step, when the central portion Xc in the width direction of the hot-rolled steel sheet is heated from room temperature to a holding temperature T₁ and held at the temperature, the temperature of the steel sheet position Xe located 10 mm from the outermost edge portion in the width direction of the hot-rolled steel sheet increases from room temperature to a maximum temperature T₂ lower than the holding temperature T₁, and a heating rate Vc of the central portion Xc in the width direction of the sheet is set higher than a heating rate Ve of the steel sheet position Xe by 1.0°C/s or more.

4. The method for producing the hot-rolled annealed steel sheet according to claim 3, wherein the hot-rolled sheet annealing step satisfies at least one of conditions (1) to (4) below:
(1) the holding temperature T₁ for the central portion Xc in the width direction of the hot-rolled steel sheet is set to 900°C or higher,
(2) a holding time t₁ for the central portion Xc in the width direction of the hot-rolled steel sheet at the holding temperature T₁ is in a range of 2 seconds or longer and 120 seconds or shorter,
(3) the maximum temperature T₂ of the steel sheet position Xe is in a range of 750°C or higher and 1000°C or lower, and
(4) a time t₂ during which the steel sheet position Xe is at the maximum temperature T₂ - 50°C or higher is in a range of 5 seconds or longer and 20 seconds or shorter.

5. The method for producing the hot-rolled annealed steel sheet according to claim 3, wherein,
when a hot-rolled steel sheet having a width W in a range of 900 mm or more and 1100 mm or less is subjected to the hot-rolled sheet annealing step, a heating-suppressed region is provided over a range extending from the outermost edge portion to a position located 20 mm or more and 0.250 × W or less inward from the outermost edge portion in the width direction of the sheet.

6. The method for producing the hot-rolled annealed steel sheet according to claim 4, wherein, when
a hot-rolled steel sheet having a width W in a range of 900 mm or more and 1100 mm or less is subjected to the hot-rolled sheet annealing step, a heating-suppressed region is provided over a range extending from the outermost edge portion to a position located 20 mm or more and 0.250 × W or less inward from the outermost edge portion in the width direction of the sheet.

7. A method for producing a non-oriented electrical steel sheet, comprising:
cold-rolling the hot-rolled annealed steel sheet according to claim 1 or 2 to obtain a cold-rolled steel sheet; and
subjecting the cold-rolled sheet to finishing annealing to obtain a cold-rolled annealed steel sheet.
